Europäisches Patentamt

(19) European Patent Office

Office européen des brevets

(11) Publication number: **0 012 121**
**B1**

(12) **EUROPEAN PATENT SPECIFICATION**

(45) Date of publication of patent specification: **11.01.84**    (51) Int. Cl.³: **B 62 D 53/06**

(21) Application number: **79850056.7**

(22) Date of filing: **07.06.79**

(54) A goose-neck connector for a roll-trailer.

(30) Priority: **12.06.78 SE 7806754**

(43) Date of publication of application:
**11.06.80 Bulletin 80/12**

(45) Publication of the grant of the patent:
**11.01.84 Bulletin 84/2**

(84) Designated Contracting States:
**BE DE FR GB NL**

(56) References cited:
**DE - A - 2 425 403**
**GB - A - 1 194 769**
**GB - A - 1 305 957**
**GB - A - 1 392 826**
**US - A - 2 967 720**
**US - A - 3 027 030**
**US - A - 3 066 954**
**US - A - 3 450 417**
**US - A - 3 632 139**

(73) Proprietor: **Ciserv AB**
**Indiska Oceanen**
**S 417 34 Göteborg (SE)**

(72) Inventor: **Hellström, Nils**
**Plantagegatan 4**
**S-413 05 Göteborg (SE)**

(74) Representative: **MacFie, W.R.**
**Backers Patentbyra AB Drottninggatan 15**
**S-41114 Göteborg (SE)**

A goose-neck connector for a roll-trailer

A certain type of roll-trailers is provided with a so called goose-neck connector adapted to be hitched to a vehicle when the trailer is to be moved. The connector will project forward of the platform of the trailer, and is a hindrance when the trailer is parked, either it is empty or is loaded.

On many occasions the connector has therefore been designed as a disconnectible member, which normally is mounted upon the vehicle and is provided with an arm, which during transportation is retained in a pocket at the trailer. The arm is usually, at its distal end, provided with a downwardly directed projection, which engages a recess in bottom wall of the pocket. The arm will mainly be kept in place due to friction, when the connector is lifted upwards by the vehicle (see US—A—3 450 417).

When the carriage set runs over uneven ground, movements in the vertical direction may occur, which tend to loosen the frictional engagement between the arm and the pocket. Different latching devices at the distal end of the arm have been proposed, but have often contained brackets protruding from the forward end of the trailer, and are usually so designed, that the driver must leave his seat in order to perform the final connection.

The aim of the present invention is to propose a disconnectible connector device, which on the one hand is designed so it does not obstruct the introduction of the arm into the pocket, and in the second hand does not require any elements at the trailer, projecting from the forward end thereof. A further aim of the invention is to design the device in such a manner, that it may be remotely controlled from the vehicle.

A connector according to the invention has an arm for introduction into a pocket at the trailer, the arm having a latching member cooperable with a recess within the pocket. The invention is characterized in that the latching member is fitted within the arm and is shiftable between a first position where it is in latching cooperation with the recess, and a second position where it is not in latching cooperation with the recess.

The latching member is preferably connected to a pressure fluid ram provided within the connector and arranged for remote control from the vehicle to which the connector is hitched.

One embodiment of the invention will below be described with reference to the accompanying drawings, in which

Figure 1 schematically shows a roll-trailer carriage,

Figure 2 shows a detail of the goose-neck connector and the connection pocket,

Figure 3 shows the connector, as viewed from above, and cut open along line III—III in Figure 2, and

Figure 4 shows a modified embodiment of the latching member.

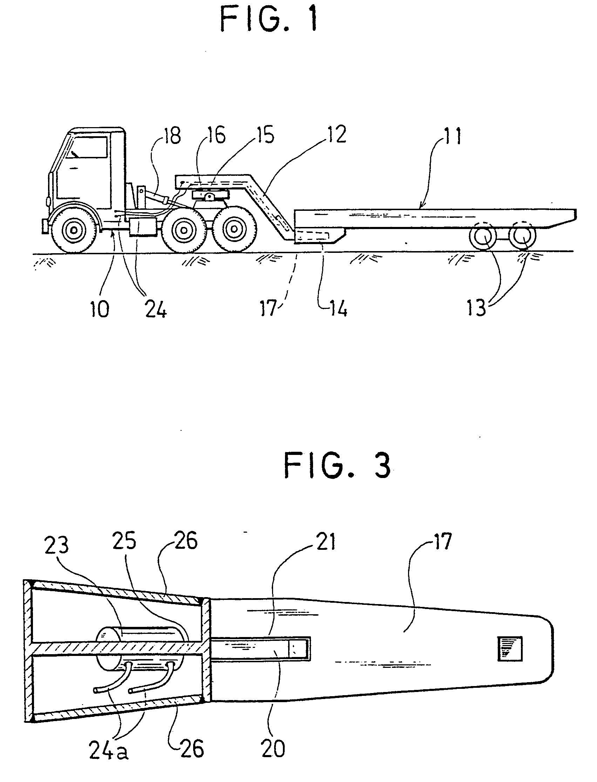

The roll-trailer carriage shown in Figure 1 includes a towing vehicle 10 and a trailer 11, which by means of a goose-neck connector 12 is hitched to the vehicle. The trailer is supported by wheels 13 at its end remote from connector. The forward end of the trailer must be carried by a vehicle during transportation.

The goose-neck connector 12 is, however, not permanently connected to the trailer, but is connectible at a pocket 14 in the front part thereof. Such a connector is a Z-shaped element, which at its forward end is provided with a pin 15, adapted to engage centrally in a turntable 16, provided at the vehicle. The end of the connector remote from the pin is formed as an arm 17, adapted to slide into pocket 14 at trailer 11. The mounting at turntable 16 is designed in such a manner, that the connector may be retained in a definite position in relation to the vehicle, and with the connector at an inclination to facilitate the introduction of its arm into pocket 14, when the trailer rests upon its wheels 13 and upon the housing enclosing pocket 14, or upon some other support.

The vehicle is provided with a pressure fluid operated arm 18 for raising and lowering the turntable. The arm 17 of the connector is introduced into the pocket while the turntable 16 remains in a lowered position, and the front end of the trailer is raised, when connection has been made, by lifting turntable 16.

The connector arm 17 is provided with a downwardly directed projection 19 at its distal end, for cooperation with a mating recess in the bottom wall of pocket 14. This projection will transfer a major part of the tractive force to the trailer.

In order to ensure an efficient connection between the arm and the pocket, arm 17 is provided with a latching member, formed as a pivotable hook 20. This is mounted in a groove 21 in the arm proper, and is designed in such a manner that it will not, during the introduction of the arm into the pocket, project outside of the arm thus forming no hindrance.

Hook 20 may be swung upwards so it engages a recess 22 in the top wall of the pocket, and may thus lock the arm in relation to the pocket. Hook 20 is operated by means of a fluid pressure ram 23, which is mounted in the middle position of the connector. The ram is, by means of conduits 24a, b, connected to a governing valve inside the driver's cabin, so that the driver need not leave his cabin to make the connection.

As is best evident from Figure 3 the connector is built up from an I-beam structure 25, to which side plates 26 has been welded, so a closed box structure is obtained.

The ram 23 is mounted in an opening 27 cut out from the waist of the I-beam, and conduits 24a are well protected within the box structure of the connector, until they reach about to turntable 16. There they are coupled to hoses 24b of sufficient length, and freely running, to permit turning movements of the goose-neck connector in relation to the vehicle. Conduits 24b are, in turn, connected to the governing valve, mentioned above, within the driver's cabin.

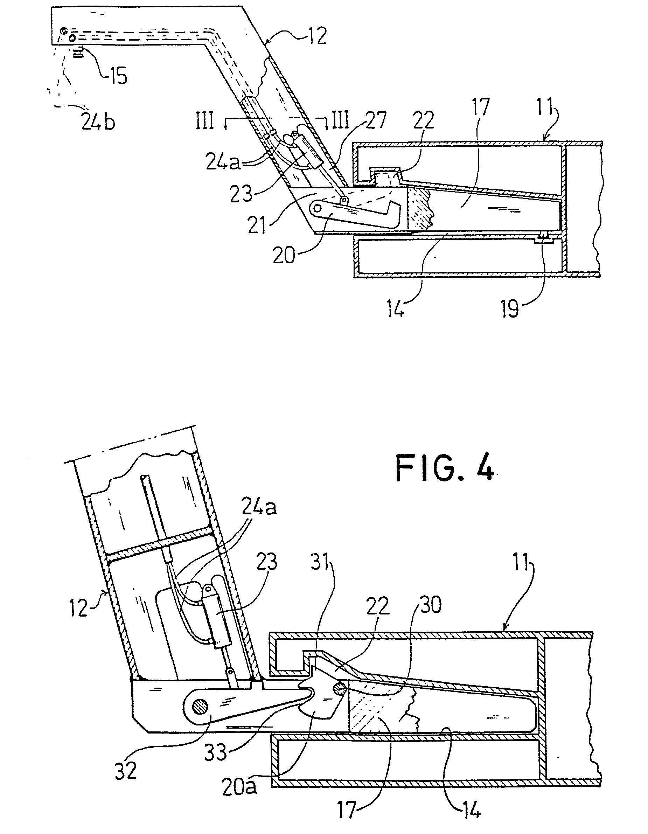

Figure 4 shows a modified embodiment of the latching member. Whenever possible the same reference numerals as in Figure 2 are used.

The latching member proper is here formed as a catch plate 20a, pivotable about an axis 30, and having a projecting nose 31 suited for engagement with recess 22. The catch plate, 20a, is manipulated by means of a lever 32, which engages a notch 33 in the edges of the plate and is operated from ram 23. This catching member operates otherwise in the same manner as described above.

The latching member thus does not include any parts protruding outside the connector at the end thereof to be introduced into the pocket, and will be remotely controlled from the driver's cabin. The design of the latching member may vary, and it is possible to use an axially displaceable bolt.

**Claims**

1. A disconnectible goose-neck connector (12) for a roll-trailer and having an arm (17) for introduction into a pocket (14) at the trailer (11), the arm (17) having a latching member (20) cooperable with a recess within the pocket, characterized in that the latching member (20; 20a) is fitted within the arm (17) and is shiftable between a first position where it is in latching cooperation with the recess (22) and a second position where it is not in latching cooperation with the recess (22).

2. A connector according to claim 1, characterized in that the latching member (20) is connected to a pressure fluid ram (23) provided with the connector (12), and arranged for remote control from the vehicle (10) to which the connector is hitched.

3. A connector according to claim 2, characterized in the latching member including a catch plate (20a), pivotable about an axis (30) and having a projecting nose (31) for engaging the recess (22), as well as a notch (33) for receiving one end of a lever (32) operable by the pressure fluid ram (23).

**Revendications**

1. Un connecteur à col de cygne déconnect- able (12) pour une semi-remorque et comportant un bras (17) destiné à être introduit dans une poche (14) de la remorque (11), le bras (17) comportant un organe de verrouillage (20) destiné à coopérer avec un renfoncement prévu à l'intérieur de la poche, caractérisé en ce que l'organe de verrouillage (20, 20a) est logé à l'intérieur du bras (17) et est déplaçable entre une première position, dans laquelle il est en relation de verrouillage avec un renfoncement (22) et une seconde position, dans laquelle il n'est pas en relation de verrouillage avec le renfoncement (22).

2. Un connecteur selon la revendication 1, caractérisé en ce que l'organe de verrouillage (20) est relié à un vérin à pression de fluide (23) associé au connecteur (12), et agencé pour être commandé à distance à partir du véhicule (10) auquel est attelé le connecteur.

3. Un connecteur selon la revendication 2, caractérisé en ce que l'organe de verrouillage comprend une plaque de verrouillage (20a) pouvant pivoter autour d'un axe (30) et comportant un bec en saillie (31) destiné à s'engager dans le renfoncement (22) ainsi qu'une encoche (33) destinée à recevoir une extrémité d'un levier (32) actionné par le vérin à pression de fluide (23).

**Patentansprüche**

1. Lösbare Schwanenhals-Verbindung (12) für einen Sattelanhänger mit einem in eine Tasche (14) am Anhänger (11) einführbaren Arm (17), der ein mit einer Nische in der Tasche zusammenwirkendes Verriegelungsglied (20) hat, dadurch gekennzeichnet, daß das Verriegelungsglied (20; 20a) in den Arm (17) eingesetzt sowie zwischen einer ersten Stellung, in der es mit der Nische (22) in Riegeleingriff ist, und einer zweiten Stellung, in der es mit der Nische (22) außer Riegeleingriff ist, umstellbar ist.

2. Verbindung nach Anspruch 1, dadurch gekennzeichnet, daß das Verriegelungsglied (20) an einen mit Druckflüssigkeit arbeitenden, an der Verbindung (12) angeordneten Zylinder (23) angeschlossen und für eine Fernbedienung vom Fahrzeug (10), an das die Verbindung gekuppelt ist, eingerichtet ist.

3. Verbindung nach Anspruch 2, dadurch gekennzeichnet, daß das Verriegelungsglied eine um eine Achse (30) schwenkbare Sperrklinkenplatte (20a) mit einer mit der Nische (22) zum Eingriff zu bringenden vorstehenden Nase (31) sowie mit einer ein Ende eines vom Druckflüssigkeit-Arbeitszylinder (23) betätigbaren Hebels (32) aufnehmenden Einkerbung (33) aufweist.

# FIG. 1

# FIG. 3

FIG. 4